# EUROPEAN PATENT APPLICATION

(11) **EP 4 682 195 A1**
(43) Date of publication of application: **21.01.2026**
(21) Application number: 25183725.8
(22) Date of filing: 18.06.2025
(51) Int. Cl.: C08J 11/14, C08G 18/48

(54) **A PROCESS FOR HYDROTHERMAL LIQUEFACTION OF A PURCONTAINING WASTE FEEDSTOCK**

(30) Priority: 28.06.2024 DK PA202470183
(71) Applicant: Ecco Sko A/S, 6261 Bredebro (DK)
(72) Inventor: LINDHARDT, Anders Thyboe, 6261 Bredebro (DK)
(74) Representative: Patentgruppen A/S

(57) **Abstract**

A process (PHP) for hydrothermal liquefaction of a PUR-containing waste feedstock (WFT) is disclosed, the process comprising the steps of providing (PPF) the PUR-containing waste feedstock (WFT), the PUR-containing waste feedstock (WFT) comprising polyurethane, wherein at least 30% by weight of said polyurethane is polyether polyol-based polyurethane, subjecting the PUR-containing waste feedstock (WFT) to hydrothermal liquefaction (HTL) to obtain a HTL output stream (OPS), separating (SEP) polyether polyol (PEP) from the HTL output stream (OPS). Also, a system for decomposing PUR-containing waste feedstock is disclosed.

## Description

### FIELD OF INVENTION

The invention relates to a process for hydrothermal liquefaction of a PUR-containing waste feedstock according to the claims and a system for decomposing PUR-containing waste feedstock according to the claims.

### BACKGROUND

In recent years massive developments has been made in more efficient utilization of waste products including various polymeric products by use of a wide range of different techniques.

One promising technique is hydrothermal liquefaction, typically where a feedstock comprising biomass in an aqueous phase is subjected high temperature and pressure for a certain time period to obtain a biocrude and in certain cases by-products.

However, certain problems remain, e.g. obtaining an efficient utilization of polyurethane still remains. It may be an object of the invention to overcome one or more of such problems.

### SUMMARY

The invention relates to a process for hydrothermal liquefaction of a PUR-containing waste feedstock, the process comprising the steps of
providing the PUR-containing waste feedstock, the PUR-containing waste feedstock comprising polyurethane, wherein at least 30% by weight of said polyurethane is polyether polyol-based polyurethane,
subjecting the PUR-containing waste feedstock to hydrothermal liquefaction to obtain an HTL output stream,
separating polyether polyol from the HTL output stream.

One advantage of the invention may be that an effective depolymerization of polyurethane may occur while at the same time preparing the HTL products to favor purification of the original polyether polyols used to prepare parts of the PUR-containing waste feedstock.

In more detail, the advantageous process of the invention provides depolymerization of polyurethane into monomers or components thereof, including polyether polyols from the polyether polyol-based polyurethane. This is due to the fact that the use of hydrothermal liquefaction facilitates depolymerization of polyether polyol-based polyurethane to its monomers or components thereof, however without decomposing the targeted polyether polyol compounds.

However, waste feedstocks containing polyurethane of various sources may contain both polyether polyol-based polyurethane and polyester polyol-based polyurethane, e.g. the waste feedstock may comprise components of different polyurethane composition. Thus, a depolymerization would result in a mixture of its monomeric compounds, including polyether polyol and polyester polyol and thus need further separation to obtain more well-defined monomeric compound fractions. Importantly, separation of polyether-based polyols from its corresponding polyester polyol counterpart is acknowledge to be a complicated and energy consuming process. The use of hydrothermal liquefaction, however, provides not only the desired depolymerization resulting in polyether polyol, but further decomposes polyester polyol into its components, such as diols and dibasic acids. Thus, further decomposition of polyester polyol is highly desirable, as it provides for a relatively simple separation between the polyether polyols and the decomposed polyester polyols and thus provides a more well-defined polyether polyol fraction among the products of the HTL process

A further advantage of the invention may be that it further allows separation and isolation of precursors of isocyanate, such as methylene diphenyl diamine (MDA), toluene diamine (TDA), polymeric methylene diphenyl diamine PMDA, etc. from the HTL output stream.

In the present context it should be understood that the polyether polyol-based polyurethane refers to polyurethane made using polyether polyol as the sole or major polyol component. In an embodiment of the invention, the polyether polyol-based polyurethane comprises at least 90% by weight of polyurethane made using polyether polyol as the sole polyol component, such as at least 95% by weight of polyurethane made using polyether polyol as the sole polyol component. In an embodiment of the invention, the polyether polyol-based polyurethane is made using polyether polyol as the sole polyol.

In an embodiment of the invention, the polyurethane is made using at least one isocyanate and at least one polyol, wherein said at least one polyol comprises polyether polyol in an amount of at least 30% by weight of said at least one polyol, such as at least 50% by weight of said at least one polyol, such as at least 70% by weight of said at least one polyol. In one embodiment, the polyurethane is composed of a single type of polyurethane. In one embodiment, the polyurethane comprises two or more different types of polyurethane.

It is noted that the terms "PUR containing waste feedstock" and "PUR containing feedstock" may be used interchangeably.

According to an embodiment of the invention, the PUR-containing waste feedstock comprises polyurethane in an amount of at least 50% by weight of the dry matter of the PUR-containing waste feedstock, such as at least 75% by weight of the dry matter of the PUR-containing waste feedstock, such as at least 90% by weight of the dry matter of the PUR-containing waste feedstock, such as at least 95% by weight of the dry matter of the PUR-containing waste feedstock, such as at least 98% by weight of the dry matter of the PUR-containing waste feedstock.

An advantage of the above embodiment may be that the yield of polyether polyol and isocyanate components may be improved. Conventionally, hydrothermal liquefaction is focused on the production of biocrude. However, by minimizing non-polyurethane components in the feedstock, the present inventor realized that yields of more valuable components including polyether polyol could be greatly optimized, even if this meant sacrificing the yield of the biocrude.

In the present context, it is understood that when referring to the dry matter of the PUR containing waste feedstock, this refers to the PUR containing waste feedstock comprises dry matter and the content refers to the dry matter of the PUR containing feedstock. Thus, if the PUR containing waste feedstock comprises e.g. 80% water and 20% dry matter, and if specifying a content of an input portion of e.g. 50% by weight of the dry matter of the PUR containing waste feedstock, the 50% is based on the 20% dry matter of the PUR containing waste feedstock and thus in this example would be 10% by weight of the PUR containing waste feedstock.

In an embodiment of the invention, the PUR-containing waste feedstock comprises polyurethane in an amount of 50 to 100% by weight of the dry matter of the PUR-containing waste feedstock, such as 75 to 99.9% by weight of the dry matter of the PUR-containing waste feedstock, such as 90 to 99.8% by weight of the dry matter of the PUR-containing waste feedstock, such as 95 to 99.7% by weight of the dry matter of the PUR-containing waste feedstock, such as 98 to 99.5% by weight of the dry matter of the PUR-containing waste feedstock.

According to an embodiment of the invention, the PUR-containing waste feedstock comprises non-polyurethane components in an amount of no more than 50% by weight of the dry matter of the PUR-containing waste feedstock, such as no more than 25% by weight of the dry matter of the PUR-containing waste feedstock, such as no more than 10% by weight of the dry matter of the PUR-containing waste feedstock, such as no more than 5% by weight of the dry matter of the PUR-containing waste feedstock, such as no more than 2% by weight of the dry matter of the PUR-containing waste feedstock.

Ad advantage of the above embodiment may be that by reducing the content of non-polyurethane components, the output of polyether polyols and other valuable compounds, such as isocyanate components, may be improved.

In an embodiment of the invention, the PUR-containing waste feedstock comprises non-polyurethane components in an amount of 0 to 50% by weight of the dry matter of the PUR-containing waste feedstock, such as 0.1 to 25% by weight of the dry matter of the PUR-containing waste feedstock, such as 0.2 to 10% by weight of the dry matter of the PUR-containing waste feedstock, such as 0.3 to 5% by weight of the dry matter of the PUR-containing waste feedstock, such as 0.5 to 2% by weight of the dry matter of the PUR-containing waste feedstock.

In an embodiment of the invention, the PUR-containing waste feedstock is free of non-polyurethane components.

According to an embodiment of the invention, the PUR-containing waste feedstock comprises polyurethane obtained from the group consisting of foam cushions, insulation material, packaging material, footwear, and any combination thereof.

In an embodiment of the invention, PUR-containing waste feedstock may comprise furniture upholstery, matrasses, car seats, etc., generally termed flexible polyurethane foams.

In an embodiment of the invention, PUR-containing waste feedstock may comprise insulation material from buildings, appliances, refrigerators, freezers, etc., generally termed rigid polyurethane foams.

In an embodiment of the invention, PUR-containing waste feedstock may comprise material from footwear soles, industrial rollers, conveyer belts, elastomers, automotive parts (i.e. car bumpers), PU door and window frames, furniture seats and backrests, sporting goods, industrial panels, medical equipment, etc., generally termed flexible or hard polyurethane.

According to an advantageous embodiment of the invention, the PUR-containing waste feedstock comprises polyurethane obtained from the group consisting of flexible foam polyurethane, rigid foam polyurethane, rigid solid polyurethane, flexible solid polyurethane.

It is noted that in the present context the term "solid polyurethane" refers to non-foam polyurethane.

According to an embodiment of the invention, at least 50 % by weight of said polyurethane is polyether polyol-based polyurethane, such as at least 70% by weight of said polyurethane is polyether polyol-based polyurethane, such as at least 90% by weight of said polyurethane is polyether polyol-based polyurethane, such as at least 95% by weight of said polyurethane is polyether polyol-based polyurethane, such as at least 98% by weight of said polyurethane is polyether polyol-based polyurethane.

In an embodiment of the invention, 50 to 100% by weight of said polyurethane is polyether polyol-based polyurethane, such as 70 to 99.9% by weight of said polyurethane is polyether polyol-based polyurethane, such as 90 to 99.8% by weight of said polyurethane is polyether polyol-based polyurethane, such as 95 to 99.5% by weight of said polyurethane is polyether polyol-based polyurethane, such as 98 to 99% by weight of said polyurethane is polyether polyol-based polyurethane.

According to an embodiment of the invention, said polyurethane comprises polyester polyol-based polyurethane, such as in an amount of at least 1% by weight of the polyurethane.

In an embodiment of the invention, said polyurethane comprises polyester polyol-based polyurethane in an amount of 1 to 30% by weight of the polyurethane, such as 5 to 25% by weight of the polyurethane, such as 10 to 20% by weight of the polyurethane.

According to an embodiment of the invention, said polyurethane is comprises polyurethane based on non-polyether polyols, such as in an amount of at least 1% by weight of the polyurethane.

In an embodiment of the invention, said polyurethane is comprises polyurethane based on non-polyether polyols in an amount of at least 1 to 30% by weight of the polyurethane, such as 5 to 25% by weight of the polyurethane, such as 10 to 20% by weight of the polyurethane.

According to an embodiment of the invention, said polyurethane is free of polyester polyol-based polyurethane, such as free of polyurethane based on non-polyether polyols.

According to an embodiment of the invention, the polyurethane is made using one or more isocyanates selected from the group consisting of aromatic and/or aliphatic diisocyanates including, methylene diphenyl diisocyanate (MDI), toluene diisocyanate(TDI), oligomeric diphenylmethane diisocyanate (OMDI), polymeric diphenylmethane diisocyanate (PMDI), 1,4-butane diisocyanate (BDI), 1,6-hexamethylene diisocyanate (HMDI), isophorone diisocyanate (IPDI), cyclohexane diisocyanate (CHDI), trimethyl hexamethylenediisocyante (TMDI), methylenedi(cyclohexyl isocyanate), and any combination thereof,

It is noted that with respect to methylene diphenyl diisocyanate (MDI), this is intended to include any pure isomer and mixtures thereof including: 4,4'-, 2,4'-, and 2,2'-.

It is noted that with respect to toluene diisocyanate (TDI), this is intended to include any pure isomers and mixtures thereof including: 2,4- and 2,6-.

It is noted that with respect to oligomeric diphenylmethane diisocyanate (OMDI), this is intended to include any isomers and NCO functionalities.

It is noted that with respect to polymeric diphenylmethane diisocyanate (PMDI), this is intended to include any isomers and NCO functionalities.

It is noted that with respect to methylenedi(cyclohexyl isocyanate), this is intended to include any pure isomer and mixtures thereof including: (all isomers and mixtures thereof included, 4,4'-, 2,4'-, 2,2'.

In an embodiment of the invention, the polyurethane is made using one or more isocyanates and where the one or more isocyanates comprises MDI, TDI, PMDI, or any mixture thereof.

In an embodiment of the invention, the polyurethane comprises one or more further components, such as coloring agents, foaming agents, foaming additives, diols, catalysts, etc. Typically, such further components may, if present, comprise up to a few percentages of the polyurethane, such as up to 20% by weight of the polyurethane, such as up to 10% by weight of the polyurethane, such as up to 5% by weight of the polyurethane, such as up to 2% by weight of the polyurethane.

According to an embodiment of the invention, the PUR containing waste feedstock is added to an aqueous phase prior to hydrothermal liquefaction.

The adding of the PUR-containing waste to an aqueous phase may result in an aqueous slurry.

According to an embodiment of the invention, the PUR containing waste feedstock comprises water in an amount at least 65% by weight of the PUR containing waste feedstock when subjected to the hydrothermal liquefaction, such as at least 70% by weight of the PUR containing waste feedstock, such as at least 75% by weight of the PUR containing waste feedstock, such as at least 80% by weight of the PUR containing waste feedstock, such as at least 85% by weight of the PUR containing waste feedstock.

In an embodiment of the invention, the PUR containing waste feedstock comprises water in an amount 65 to 99% by weight of the PUR containing waste feedstock when subjected to the hydrothermal liquefaction, such as 70 to 98% by weight of the PUR containing waste feedstock, such as 75 to 95% by weight of the PUR containing waste feedstock, such as 80 to 95% by weight of the PUR containing waste feedstock, such as 85 to 90% by weight of the PUR containing waste feedstock.

According to an embodiment of the invention, the PUR-containing waste feedstock has an average particle size of no more than 10 cm, such as no more than 5 cm, such as no more than 2 cm, such as no more than 1 cm, such as no more than 5 mm, such as no more than 1 mm.

It is noted that using this may be especially advantageous when using PUR-containing waste feedstock that is fully solid, an integral foam, or a material with closed cell structures, i.e. not an open cell structure such as e.g. some matrasses. I.e. when using such PUR-containing waste feedstocks, with low surface areas and hence low access of water to the material undergoing HTL conversion, it is especially advantageous to ensure processing into a sufficiently small particle size to facilitate efficient HTL processing.

In the present context, the average particle size refers to the weight averaged particle size.

In an embodiment of the invention, the PUR-containing waste feedstock has an average particle size of 0.001 to 10 cm, such as 0.01 to 5 cm, such as 0.1 to 2 cm, such as 0.5 to 1 cm, or such as 0.01 to 5 mm, such as 0.1 to 1 mm.

According to an embodiment of the invention, the process further comprises a step of processing the PUR-containing waste feedstock to obtain an average particle size of no more than 10 cm, such as no more than 5 cm, such as no more than 2 cm, such as no more than 1 cm, such as no more than 5 mm, such as no more than 1 mm.

In an embodiment of the invention, the process further comprises a step of processing the PUR-containing waste feedstock to obtain an average particle size of 0.001 to 10 cm, such as 0.01 to 5 cm, such as 0.1 to 2 cm, such as 0.5 to 1 cm, or such as 0.01 to 5 mm, such as 0.1 to 1 mm.

It is noted that the above processing step is prior to the step of subjecting the PUR-containing waste feedstock to hydrothermal liquefaction.

According to an embodiment of the invention, the step of hydrothermal liquefaction comprises subjecting the PUR containing waste feedstock to a temperature of at least 150 degrees Celsius, such as at least 200 degrees Celsius, such as at least 250 degrees Celsius, such as at least 300 degrees Celsius.

In an embodiment of the invention, the step of hydrothermal liquefaction comprises subjecting the PUR containing waste feedstock to a temperature of 150 to 550 degrees Celsius, such as 200 to 500 degrees Celsius, such as 250 to 450 degrees Celsius, such as 300 to 450 degrees Celsius.

According to an embodiment of the invention, the step of hydrothermal liquefaction comprises subjecting the PUR containing waste feedstock to a pressure of at least 10 bar, such as at least 20 bar, at least 50 bar, such as at least 75 bar, such as at least 100 bar, such as at least 125 bar.

In an embodiment of the invention, the step of hydrothermal liquefaction comprises subjecting the PUR containing waste feedstock to a pressure 10 to 350 bar, such as 20 to 350 bar, such as 50 to 350 bar, such as 75 to 300 bar, such as 100 to 250 bar, such as 125 to 200 bar.

According to an embodiment of the invention, the step of hydrothermal liquefaction has a processing time of at least 5 minutes, such as at least 10 minutes, such as at least 20 minutes, such as at least 30 minutes.

In an embodiment of the invention, the step of hydrothermal liquefaction has a processing time of 5 minutes to 10 hours, such as 10 minutes to 10 hours, such as 20 minutes to 5 hours, such as 30 minutes to 2 hours.

According to an embodiment of the invention, the method further comprises adding an additive, a reagent, a catalyst, or any combination thereof.

According to an embodiment of the invention, the method further comprises adding a catalyst to the PUR containing waste feedstock.

Adding a catalyst may advantageously facilitate increase of desired output components, such as polyether polyol and isocyanate components.

The addition of catalyst may also serve to reduce the process temperature and/or process time needed to provide the desired output components. The addition of a catalyst may also serve to eliminate the formation of undesired process-impurities.

It is noted that in the present context, the term catalyst refers to additives having catalytic activity with respect to chemical reactions of the hydrothermal liquefaction step. It is noted that such catalyst may not necessarily be recoverable, e.g. due to inactivation by biproducts of certain other chemical processes. For example, base may be added as a catalyst for hydrolysis, but at the same time certain processes of the hydrothermal liquefaction may lead to formation of acids, which may hinder recovery of the bases. Similarly, recovery of catalysts may in some cases not be economically cost-effective. It is noted that in some cases, catalysts such as bases, may be referred to a catalytic additives, catalytic reagents, reaction-enhancing additives, or reaction-enhancing reagents.

In an embodiment of the invention, the catalyst is added to the PUR containing waste feedstock prior to the step of hydrothermal liquefaction.

According to an embodiment of the invention, the catalyst, the reagent, the additive or any combination therefore comprises a base.

According to an embodiment of the invention, the catalyst comprises a base.

In an embodiment of the invention, the base is selected from sodium hydroxide, potassium hydroxide, calcium hydroxide, calcium oxide, ammonium hydroxide, and any combination thereof.

In an embodiment of the invention, the catalyst comprises or consists of iron chloride, aluminum salts, a base, or any combination thereof.

In an embodiment of the invention, the catalyst comprises or consists of catalysts selected from the group consisting of transition metal catalysts, supported metal catalysts, noble metal catalysts, bifunctional catalysts, zeolites and heterogenous catalysts, biochar and biomass-derived catalysts, and any combination thereof.

In an embodiment of the invention, the additive may comprise a thickening agent, such as bentonite, kaolin, starch, pectin, gelatine, guar gum, xanthan gum, polyvinyl alcohol, polyacrylamide, etc. Polyether polyols may also be applied as thickening agent, i.e. polyethylene glycol (PEG), polylpropylene glycol (PPG), polytetramethylene ether glycol (PTMEG), or even the polyether polyols used for the production of the PUR found in the feedstock of the HTL process.

According to an embodiment of the invention, the catalyst is provided as part of an aqueous fraction.

According to an embodiment of the invention, the additive, the reagent, the catalyst, or any combination thereof is provided as part of an aqueous fraction.

According to an embodiment of the invention, the hydrothermal liquefaction is operated in continuous mode.

According to an embodiment of the invention, the hydrothermal liquefaction is operated in batch mode.

According to the invention, the process comprises a step of separating polyether polyol from the HTL output stream. This step may also be referred to as a separation step. The separation step may in some embodiment comprises separation of further compounds and/or be further specified.

According to an embodiment of the invention, the separation step comprises separating the HTL output stream into a polyether polyol containing phase and an aqueous phase. According to an embodiment of the invention, the polyether polyol is separated from the HTL output stream by physical separation.

According to an embodiment of the invention, separation comprises at least one of decantation, centrifugation, flotation, a gravitational separation, such as by using a separation funnel, and polarity adjustment of the water phase.

It is noted that polarity adjustment of the water phase may be obtained e.g. by adding brine, salts, pH agents, demulsifying agent, etc.

In an embodiment of the invention, the separation comprises decantation.

In an embodiment of the invention, the separation comprises centrifugation.

In an embodiment of the invention, the separation comprises flotation.

In an embodiment of the invention, the separation comprises gravitational separation such as by using a separation funnel.

In an embodiment of the invention, the separation comprises solvent separation or solvent extraction, such as by addition of an organic solvent with higher affinity for the oil-phase that for the aqueous phase.

In an embodiment of the invention, the separation comprises membrane separation such as by using a membrane to selectively remove either oil of water.

In an embodiment of the invention, the separation comprises separation by distillation, such as by using a distillation to remove water and/or a fraction of the oil phase.

According to an embodiment of the invention, an amount of polyether polyol is obtained by the separation corresponding to at least 70% by weight of the maximum theoretical yield based on the applied polyurethane, such as at least 80% by weight of the maximum theoretical yield based on the applied polyurethane, such as at least 90% by weight of the maximum theoretical yield based on the applied polyurethane, such as at least 95% by weight of the maximum theoretical yield based on the applied polyurethane.

In an embodiment of the invention, an amount of polyether polyol is obtained by the separation corresponding to 70 to 100% by weight of the maximum theoretical yield based on the applied polyurethane, such as 80 to 99.9% by weight of the maximum theoretical yield based on the applied polyurethane, such as 90 to 99.5% by weight of the maximum theoretical yield based on the applied polyurethane, such as 95 to 99% by weight of the maximum theoretical yield based on the applied polyurethane.

According to an embodiment of the invention, the HTL output stream comprises an amount of polyether polyol, and wherein an amount of polyether polyol is obtained by the separation corresponding to at least 50% by weight of the amount of polyether polyol in the HTL output stream, such as at least 60% by weight of the amount of polyether polyol in the HTL output stream, such as at least 70% by weight of the amount of polyether polyol in the HTL output stream, such as at least 80% by weight of the amount of polyether polyol in the HTL output stream.

In an embodiment of the invention, the HTL output stream comprises an amount of polyether polyol, and wherein an amount of polyether polyol is obtained by the separation corresponding to 50 to 100% by weight of the amount of polyether polyol in the HTL output stream, such as 60 to 99.9% by weight of the amount of polyether polyol in the HTL output stream, such as 70 to 99.5% by weight of the amount of polyether polyol in the HTL output stream, such as 80 to 99% by weight of the amount of polyether polyol in the HTL output stream.

According to an embodiment of the invention, the separation step further comprises separating the diamines (isocyanate precursors) or its components from the HTL output stream.

According to an embodiment of the invention, an amount of isocyanate or its diamine precursor components is obtained by the separation corresponding to at least 50% by weight of the maximum theoretical yield based on the applied polyurethane, such as at least 60% by weight of the maximum theoretical yield based on the applied polyurethane, such as at least 70% by weight of the maximum theoretical yield based on the applied polyurethane, such as at least 80% by weight of the maximum theoretical yield based on the applied polyurethane.

In an embodiment of the invention, an amount of isocyanate or its components is obtained by the separation corresponding to 50 to 100% by weight of the maximum theoretical yield based on the applied polyurethane, such as 60 to 99.9% by weight of the maximum theoretical yield based on the applied polyurethane, such as 70 to 99.5% by weight of the maximum theoretical yield based on the applied polyurethane, such as 80 to 99% by weight of the maximum theoretical yield based on the applied polyurethane.

According to an embodiment of the invention, the HTL output stream comprises an amount of isocyanate or its diamine precursor components, and wherein an amount of isocyanate or its components is obtained by the separation corresponding to at least 50% by weight of the amount of pol isocyanate or its components in the HTL output stream, such as at least 60% by weight of the amount of isocyanate or its components in the HTL output stream, such as at least 70% by weight of the amount of isocyanate or its components in the HTL output stream, such as at least 80% by weight of the amount of isocyanate or its components the HTL output stream.

In an embodiment of the invention, the HTL output stream comprises an amount of isocyanate or its components, and wherein an amount of isocyanate or its components is obtained by the separation corresponding to 50 to 100% by weight of the amount of isocyanate or its components in the HTL output stream, such as 60 to 99.9% by weight of the amount of isocyanate or its components in the HTL output stream, such as 70 to 99.5% by weight of the amount of isocyanate or its components in the HTL output stream, such as 80 to 99% by weight of the amount of isocyanate or its components the HTL output stream.

According to an embodiment of the invention, a water stream is obtained from the HTL output stream and wherein at least part of said water stream is mixed with said PUR containing waste feedstock prior to hydrothermal liquefaction.

It is noted that said at least part of said water stream may be at least partially purified or otherwise treated to avoid undesirable buildup of components.

According to an embodiment of the invention, the HTL output stream is subjected to processing before said separation step.

According to an embodiment of the invention, said processing involves a degassing step, where the output stream is degassed of i.e. carbon dioxide until an equilibrium is reached. This degassing step might require alteration of the output stream by heating, by cooling, by changing the pH value, applying vacuum in the headspace, treatment with ultrasound, etc.

According to an embodiment of the invention, said processing comprises three-phase separation.

According to an embodiment of the invention, said processing comprises solid liquid separation.

The invention further relates to a system for decomposing PUR-containing waste feedstock, the system comprising
at least one inlet for receiving PUR-containing waste feedstock,
at least one hydrothermal liquefaction unit comprising a HTL inlet and a HTL outlet, the HTL inlet being arranged to receive PUR-containing waste feedstock from said inlet, the HTL outlet being arranged to output a HTL output stream,
at least one separation unit arranged to separate polyether polyol from the HTL output stream.

According to an embodiment of the invention, the system is configured to operate in accordance with the process according to the invention or any of its embodiments.

The invention further relates to aspects and embodiments according to the following clauses.

Clause 1. A process (PHP) for hydrothermal liquefaction of a PUR-containing waste feedstock (WFT), the process comprising the steps of
providing (PPF) the PUR-containing waste feedstock (WFT), the PUR-containing waste feedstock (WFT) comprising polyurethane, wherein at least 30% by weight of said polyurethane is polyether polyol-based polyurethane,
subjecting the PUR-containing waste feedstock (WFT) to hydrothermal liquefaction (HTL) to obtain an HTL output stream (OPS),
separating (SEP) polyether polyol (PEP) from the HTL output stream (OPS).

Clause 2. The process according to clause 1, wherein the PUR-containing waste feedstock comprises polyurethane in an amount of at least 50% by weight of the dry matter of the PUR-containing waste feedstock, such as at least 75% by weight of the dry matter of the PUR-containing waste feedstock, such as at least 90% by weight of the dry matter of the PUR-containing waste feedstock, such as at least 95% by weight of the dry matter of the PUR-containing waste feedstock, such as at least 98% by weight of the dry matter of the PUR-containing waste feedstock.

Clause 3. The process according to clause 1 or 2, wherein the PUR-containing waste feedstock comprises non-polyurethane components in an amount of no more than 20% by weight of the dry matter of the PUR-containing waste feedstock, such as no more than 10% by weight of the dry matter of the PUR-containing waste feedstock, such as no more than 5% by weight of the dry matter of the PUR-containing waste feedstock, such as no more than 2% by weight of the dry matter of the PUR-containing waste feedstock, such as no more than 1% by weight of the dry matter of the PUR-containing waste feedstock.

Clause 4. The process according to any of clauses 1-3, wherein the PUR-containing waste feedstock comprises polyurethane obtained from the group consisting of foam cushions, insulation material, packaging material, footwear, and any combination thereof.

Clause 5. The process according to any of clauses 1-4, wherein the PUR-containing waste feedstock comprises polyurethane obtained from the group consisting of flexible foam polyurethane, rigid foam polyurethane, rigid non-foam polyurethane, flexible non-foam polyurethane.

Clause 6. The process according to any of clauses 1-5, wherein at least 50 % by weight of said polyurethane is polyether polyol-based polyurethane, such as at least 70% by weight of said polyurethane is polyether polyol-based polyurethane, such as at least 90% by weight of said polyurethane is polyether polyol-based polyurethane, such as at least 95% by weight of said polyurethane is polyether polyol-based polyurethane, such as at least 98% by weight of said polyurethane is polyether polyol-based polyurethane.

Clause 7. The process according to any of clauses 1-6, wherein said polyurethane comprises polyester polyol-based polyurethane, such as in an amount of at least 1% by weight of the polyurethane.

Clause 8. The process according to any of clauses 1-7, wherein said polyurethane is comprises polyurethane based on non-polyether polyols, such as in an amount of at least 1% by weight of the polyurethane.

Clause 9. The process according to any of clauses 1-8, wherein said polyurethane is free of polyester polyol-based polyurethane, such as free of polyurethane based on non-polyether polyols.

Clause 10. The process according to any of clauses 1-9, wherein the polyurethane is made using isocyanates selected from the group consisting of aromatic and/or aliphatic diisocyanates including, methylene diphenyl diisocyanate (MDI), toluene diisocyanate (TDI), oligomeric diphenylmethane diisocyanate (OMDI), polymeric diphenylmethane diisocyanate (PMDI), 1,4-butane diisocyanate (BDI), 1,6-hexamethylene diisocyanate (HMDI), isophorone diisocyanate (IPDI), cyclohexane diisocyanate (CHDI), trimethyl hexamethylenediisocyante (TMDI), 4,4'-diisocyanato dicyclohexylmethane (), and any combination thereof.

Clause 11. The process according to any of clauses 1-10, wherein the polyurethane is made using one or more isocyanates and where the one or more isocyanates comprises MDI, TDI, PMDI, or any mixture thereof.

Clause 12. The process according to any of clauses 1-11, wherein the PUR containing waste feedstock is added to an aqueous phase prior to hydrothermal liquefaction.

Clause 13. The process according to any of clauses 1-12, wherein the PUR containing waste feedstock comprises water in an amount at least 65% by weight of the PUR containing waste feedstock when subjected to the hydrothermal liquefaction, such as at least 70% by weight of the PUR containing waste feedstock, such as at least 75% by weight of the PUR containing waste feedstock, such as at least 80% by weight of the PUR containing waste feedstock, such as at least 85% by weight of the PUR containing waste feedstock.

Clause 14. The process according to any of clauses 1-13, wherein the PUR-containing waste feedstock has an average particle size of no more than 10 cm, such as no more than 5 cm, such as no more than 2 cm, such as no more than 1 cm, such as no more than 5 mm, such as no more than 1 mm.

Clause 15. The process according to any of clauses 1-14, wherein the process further comprises a step of processing the PUR-containing waste feedstock to obtain an average particle size of no more than 10 cm, such as no more than 5 cm, such as no more than 2 cm, such as no more than 1 cm, such as no more than 5 mm, such as no more than 1 mm.

Clause 16. The process according to any of clauses 1-15, wherein the step of hydrothermal liquefaction comprises subjecting the PUR containing waste feedstock to a temperature of at least 150 degrees Celsius, such as at least 200 degrees Celsius, such as at least 250 degrees Celsius, such as at least 300 degrees Celsius.

Clause 17. The process according to any of clauses 1-16, wherein the step of hydrothermal liquefaction comprises subjecting the PUR containing waste feedstock to a pressure of at least 5 bar, such as at least 10 bar, such as at least 20 bar, at least 50 bar, such as at least 75 bar, such as at least 100 bar, such as at least 125 bar.

Clause 18. The process according to any of clauses 1-17, wherein the step of hydrothermal liquefaction has a processing time of at least 5 minutes, such as at least 10 minutes, such as at least 20 minutes, such as at least 30 minutes.

Clause 19. The process according to any of clauses 1-18, wherein the method further comprises adding an additive, a reagent, a catalyst, or any combination thereof.

Clause 20. The process according to any of clauses 1-19, wherein the catalyst, the reagent, the additive or any combination therefore comprises a base.

Clause 21. The process according to any of clauses 1-20, wherein the catalyst is provided as part of an aqueous fraction.

Clause 22. The process according to any of clauses 1-21, wherein the hydrothermal liquefaction is operated in continuous mode.

Clause 23. The process according to any of clauses 1-22, wherein the hydrothermal liquefaction is operated in batch mode.

Clause 24. The process according to any of clauses 1-23, wherein the separation step comprises separating the HTL output stream into a polyether polyol containing phase and an aqueous phase.

Clause 25. The process according to any of clauses 1-24, wherein the polyether polyol is separated from the HTL output stream by physical separation.

Clause 26. The process according to any of clauses 1-25, wherein separation comprises at least one of decantation, centrifugation, flotation, a gravitational separation, such as by using a separation funnel, and polarity adjustment of the water phase.

Clause 27. The process according to any of clauses 1-26, wherein an amount of polyether polyol is obtained by the separation corresponding to at least 50% by weight of the maximum theoretical yield based on the applied polyurethane, such as at least 60% by weight of the maximum theoretical yield based on the applied polyurethane, such as at least 70% by weight of the maximum theoretical yield based on the applied polyurethane, such as at least 80% by weight of the maximum theoretical yield based on the applied polyurethane.

Clause 28. The process according to any of clauses 1-27, wherein the HTL output stream comprises an amount of polyether polyol, and wherein an amount of polyether polyol is obtained by the separation corresponding to at least 50% by weight of the amount of polyether polyol in the HTL output stream, such as at least 60% by weight of the amount of polyether polyol in the HTL output stream, such as at least 70% by weight of the amount of polyether polyol in the HTL output stream, such as at least 80% by weight of the amount of polyether polyol in the HTL output stream.

Clause 29. The process according to any of clauses 1-28, wherein the separation step further comprises separating isocyanate or its components from the HTL output stream (OPS).

Clause 30. The process according to any of clauses 1-29, wherein an amount of isocyanate or its diamine precursor components is obtained by the separation corresponding to at least 50% by weight of the maximum theoretical yield based on the applied polyurethane, such as at least 60% by weight of the maximum theoretical yield based on the applied polyurethane, such as at least 70% by weight of the maximum theoretical yield based on the applied polyurethane, such as at least 80% by weight of the maximum theoretical yield based on the applied polyurethane.

Clause 31. The process according to any of clauses 1-30, wherein the HTL output stream comprises an amount of isocyanate or its diamine precursor components, and wherein an amount of isocyanate or its components is obtained by the separation corresponding to at least 50% by weight of the amount of pol isocyanate or its components in the HTL output stream, such as at least 60% by weight of the amount of isocyanate or its components in the HTL output stream, such as at least 70% by weight of the amount of isocyanate or its components in the HTL output stream, such as at least 80% by weight of the amount of isocyanate or its components the HTL output stream.

Clause 32. The process according to any of clauses 1-31, wherein a water stream is obtained from the HTL output stream and wherein at least part of said water stream is mixed with said PUR containing waste feedstock prior to hydrothermal liquefaction.

Clause 33. The process according to any of clauses 1-32, wherein the HTL output stream is subjected to processing before said separation step.

Clause 34. The process according to any of clauses 1-33, wherein said processing comprises three-phase separation.

Clause 35. The process according to any of clauses 1-34, wherein said processing comprises solid liquid separation.

Clause 36. A system for decomposing PUR-containing waste feedstock, the system comprising
at least one inlet for receiving PUR-containing waste feedstock,
at least one hydrothermal liquefaction unit comprising a HTL inlet and a HTL outlet, the HTL inlet being arranged to receive PUR-containing waste feedstock from said inlet, the HTL outlet being arranged to output a HTL output stream,
at least one separation unit arranged to separate polyether polyol from the HTL output stream.

Clause 37. The system according to clause 36, wherein the system is configured to operate in accordance with the process according to any of clauses 1-35.

### FIGURES

The invention will now be described with reference to the figures, where
Figure 1 illustrates a process according to an embodiment of the invention,
Figure 2 illustrates a preprocessing step according to an embodiment of the invention,
Figure 3 illustrates a hydrothermal liquefaction according to an embodiment of the invention where hydrothermal liquefaction is a continuous process,
Figure 4 illustrates a hydrothermal liquefaction according to an embodiment of the invention where hydrothermal liquefaction is a batch process,
Figure 5 illustrates a separation step according to an embodiment of the invention, and
Figure 6 illustrates recirculation of a residual aqueous fraction according to an embodiment of the invention.

### DETAILED DESCRIPTION

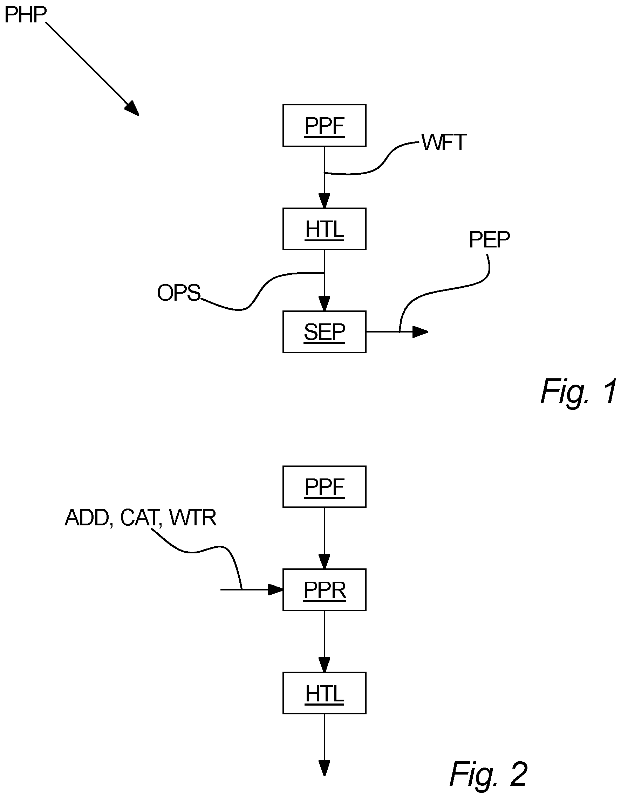

Referring to figure 1, a process PHP for hydrothermal liquefaction of a PUR-containing waste feedstock WFT is illustrated according to an embodiment of the invention.

First, the process comprises the step of providing PPF the PUR-containing waste feedstock WFT. The feedstock WFT comprises polyurethane, of which at least 30% by weight is polyether polyol-based polyurethane.

Then, the process comprises a further step of subjecting the PUR-containing waste feedstock WFT to hydrothermal liquefaction HTL to obtain a HTL output stream OPS.

Finally, the process comprises the step of separating SEP polyether polyol PEP from the HTL output stream OPS.

It is noted that the process may comprise one or more additional steps, e.g. intermediate steps or post-treatment steps. Examples of such steps will be described in the following.

Referring to figure 2, a preprocessing step PPR is illustrated according to an embodiment of the invention. It is noted that the preprocessing step PPR as illustrated in figure 2 is usable within the context of the embodiment of figures 1.

Similar to what is illustrated in figure 1, the process first comprises the step PPF of providing the PUR-containing waste feedstock WFT. After the preprocessing step PPR, the PUR-containing waste feedstock is subjected to hydrothermal liquefaction HTL and further processed in accordance with the embodiment illustrated in figure 1.

The preprocessing step PPR may comprise adding one or more of water WTR, additives ADD and/or catalysts CAT. The preprocessing step may also comprise particulating the PUR-containing waste feedstock WFT to obtain a certain desired particle size, e.g. below a certain limit.

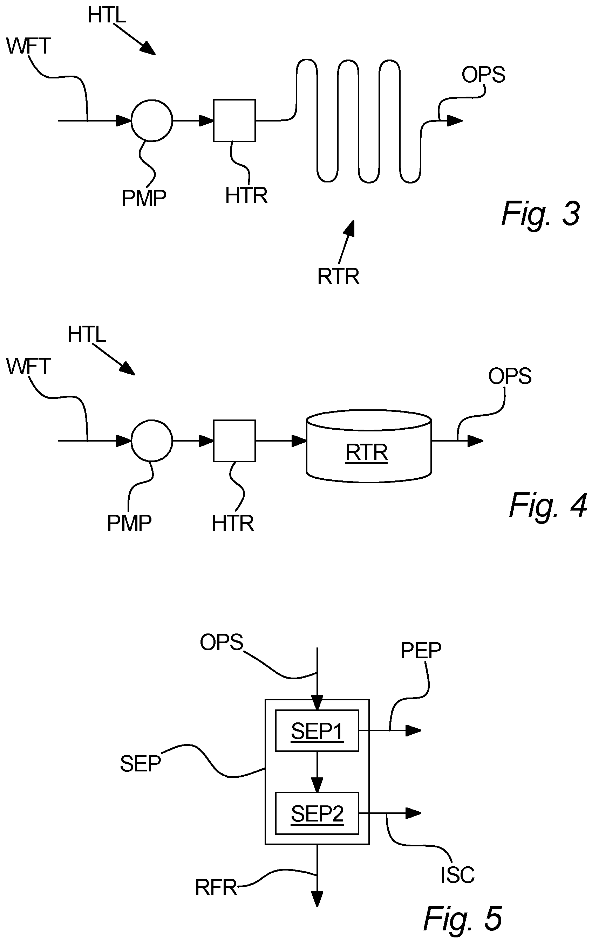

Now, figures 3 and 4 illustrates different modes of hydrothermal liquefaction according to two different embodiments, both of which may be combined with the embodiment illustrated in figure 1 and/or any other embodiments described as combinable with the embodiment of figure 1. In particular, figure 3 illustrates a continuous hydrothermal liquefaction, whereas figure 4 illustrates a batch mode hydrothermal liquefaction.

It is noted that in embodiments of the invention, batch mode and continuous mode may be combined. In one embodiment, a continuous process may be followed by a batch mode process. In one embodiment, a batch mode process may be followed by a continuous mode process.

In the embodiment of figure 3, the PUR containing waste feedstock WFT is first fed to a pressurization device PMP, e.g. a high pressure pump which pressurizes the PUR containing waste feedstock to the desired pressure level. It is noted that in some embodiments, the pressurization device PMP may be a single pump, whereas it in other embodiments may include two or more pumps e.g. operating to sequentially increase the pressure to the desired level.

Next, pressurized PUR containing waste feedstock WFT is fed to a heating device HTR, which is arranged to heat the PUR containing waste feedstock to the desired temperature for hydrothermal liquefaction. It is noted that the heating device HTR may be a single heater or a combination of several heaters. It may also include heating based e.g. heat pumps, electrical heating, gas heating, heating based on combustion of hydrocarbons etc. It is further noted that while figure 3 shows the heating device HTR subsequent to the pressurizing device PMP, however the order of these may in some embodiments be opposite. Also, when e.g. several heaters are used, these may be both before and after the pressurizing device PMP.

Then, the PUR containing waste feedstock WFT is fed through a reactor RTR, which may e.g. be composed of a pipe having a suitable length for the hydrothermal liquefaction. For a given cross-sectional area, increasing the length of the pipe forming the reactor RTR leads to a longer residence time for a given feeding rate, and vice versa. Finally, the HTL output stream OPS may be obtained.

It is noted that when the referring to the heating device HTR, this may comprise one or more distributed sub-units, e.g. for gradual heating and/or preserving a high temperature of the PUR containing waste feedstock WFT.

In some embodiments, the heating device HTR and the reactor RTR are partly integrated, e.g. by using a subunit of the heating device HTR to heat the particulated feedstock fraction prior to the reactor RTR and then integrating further subunits of the heating device HTR with the reactor RTR.

In some embodiments, the heating device HTR and the reactor RTR are integrated, e.g. by using integrating subunits of the heating device HTR with the reactor RTR for heating of the PUR containing waste feedstock WFT inside the reactor RTR, or where the RTR is heated by an external heating source or is the heating source itself

In the embodiment of figure 4, the PUR containing waste feedstock WFT may similarly be fed to a pressurization device PMP, and then to a heating device HTR. Similar to the embodiment of figure 3, the pressurization device PMP and the heating device HTR, whereas the reactor RTR is a batch reactor, where the PUR containing waste feedstock WFT is processed during retention time. Finally, the HTL output stream OPS may be obtained.

It is further noted that while figure 4 shows the heating device HTR subsequent to the pressurizing device PMP, however the order of these may in some embodiments be opposite. Also, when e.g. several heaters are used, these may be both before and after the pressurizing device PMP.

A feature not shown in figure 3 or 4, but which may be included in various embodiments, is a device for reducing the pressure to ambient pressure.

Now referring to figure 5, a separation step SEP is illustrated according to an embodiment of the invention. The illustrated separation step SEP is usable within the embodiment illustrated in figure 1.

As shown in figure 5, the HTL output stream OPS, e.g. obtained in accordance with the process illustrated in figure 1, is subjected to a separation step SEP, which comprises a first separation SEP1 and a second separation SEP2. In the first separation SEP, the polyether polyol PEP is separated from the HTL output stream OPS. In the second separation SEP2, isocyanate or its component are separated from the HTL output stream OPS.

Finally, a residual aqueous fraction RFR is outputted from the separation SEP.

It is noted that in some embodiments, the order of the first and second separation SEP1, SEP2 may be reversed.

It is further noted that in some embodiments, the separation step may comprise separation of further components. Also, the separated polyether polyol PEP, the isocyanate or its component ISC, and/or any potential further separated components may be subjected to further purification steps and similar.

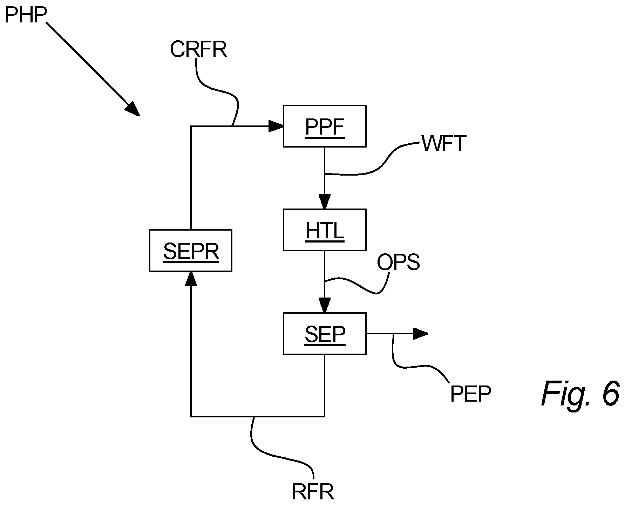

Referring now to figure 6, an embodiment of the invention is illustrated. It is noted that the embodiment is compatible with the embodiment of figure 1 and any of the embodiments of figure 2-5.

As shown the process PHP comprises, further to the process illustrated in figure 1, a residual aqueous fraction RFR is obtained from separation step. In this embodiment, the residual aqueous fraction RFR is subjected to a further separation step SEPR and subsequently added to the PUR containing feedstock fraction WFT.

In the further separation SEPR, any undesirable and/or other components be removed fully or partly to prevent undesirable buildup of such components.

It is noted that in some embodiments, only a part of the residual aqueous fraction RFR may be recirculated to the step PPF of providing the PUR containing feedstock, however, whether the recirculation of the residual aqueous fraction RFR is fully or partly, it may significantly reduce the need for adding further aqueous fractions, such as freshwater, to the PUR containing feedstock.

It is further noted that the recirculation is illustrated as by returning the residual aqueous fraction RFR step PPF of providing the PUR containing feedstock, however, it may e.g. in some embodiments be added to the preprocessing step PPR, as illustrated in figure 2.

## Claims

1. A process (PHP) for hydrothermal liquefaction of a PUR-containing waste feedstock (WFT), the process comprising the steps of
providing (PPF) the PUR-containing waste feedstock (WFT), the PUR-containing waste feedstock (WFT) comprising polyurethane, wherein at least 30% by weight of said polyurethane is polyether polyol-based polyurethane,
subjecting the PUR-containing waste feedstock (WFT) to hydrothermal liquefaction (HTL) to obtain an HTL output stream (OPS),
separating (SEP) polyether polyol (PEP) from the HTL output stream (OPS).

2. The process according to claim 1, wherein the PUR-containing waste feedstock comprises polyurethane in an amount of at least 50% by weight of the dry matter of the PUR-containing waste feedstock, such as at least 75% by weight of the dry matter of the PUR-containing waste feedstock, such as at least 90% by weight of the dry matter of the PUR-containing waste feedstock, such as at least 95% by weight of the dry matter of the PUR-containing waste feedstock, such as at least 98% by weight of the dry matter of the PUR-containing waste feedstock.

3. The process according to claim 1 or 2, wherein the PUR-containing waste feedstock comprises non-polyurethane components in an amount of no more than 20% by weight of the dry matter of the PUR-containing waste feedstock, such as no more than 10% by weight of the dry matter of the PUR-containing waste feedstock, such as no more than 5% by weight of the dry matter of the PUR-containing waste feedstock, such as no more than 2% by weight of the dry matter of the PUR-containing waste feedstock, such as no more than 1% by weight of the dry matter of the PUR-containing waste feedstock.

4. The process according to any of claims 1-3, wherein at least 50 % by weight of said polyurethane is polyether polyol-based polyurethane, such as at least 70% by weight of said polyurethane is polyether polyol-based polyurethane, such as at least 90% by weight of said polyurethane is polyether polyol-based polyurethane, such as at least 95% by weight of said polyurethane is polyether polyol-based polyurethane, such as at least 98% by weight of said polyurethane is polyether polyol-based polyurethane.

5. The process according to any of claims 1-4, wherein said polyurethane is comprises polyurethane based on non-polyether polyols, such as in an amount of at least 1% by weight of the polyurethane.

6. The process according to any of claims 1-5, wherein the PUR containing waste feedstock comprises water in an amount at least 65% by weight of the PUR containing waste feedstock when subjected to the hydrothermal liquefaction, such as at least 70% by weight of the PUR containing waste feedstock, such as at least 75% by weight of the PUR containing waste feedstock, such as at least 80% by weight of the PUR containing waste feedstock, such as at least 85% by weight of the PUR containing waste feedstock.

7. The process according to any of claims 1-6, wherein the PUR-containing waste feedstock has an average particle size of no more than 10 cm, such as no more than 5 cm, such as no more than 2 cm, such as no more than 1 cm, such as no more than 5 mm, such as no more than 1 mm.

8. The process according to any of claims 1-7, wherein the step of hydrothermal liquefaction comprises subjecting the PUR containing waste feedstock to a temperature of at least 150 degrees Celsius, such as at least 200 degrees Celsius, such as at least 250 degrees Celsius, such as at least 300 degrees Celsius.

9. The process according to any of claims 1-8, wherein the step of hydrothermal liquefaction comprises subjecting the PUR containing waste feedstock to a pressure of at least 5 bar, such as at least 10 bar, such as at least 20 bar, at least 50 bar, such as at least 75 bar, such as at least 100 bar, such as at least 125 bar.

10. The process according to any of claims 1-9, wherein the step of hydrothermal liquefaction has a processing time of at least 5 minutes, such as at least 10 minutes, such as at least 20 minutes, such as at least 30 minutes.

11. The process according to any of claims 1-10, wherein the hydrothermal liquefaction is operated in continuous mode.

12. The process according to any of claims 1-11, wherein the separation step comprises separating the HTL output stream into a polyether polyol containing phase and an aqueous phase.

13. The process according to any of claims 1-12, wherein the polyether polyol is separated from the HTL output stream by physical separation.

14. The process according to any of claims 1-13, wherein a water stream is obtained from the HTL output stream and wherein at least part of said water stream is mixed with said PUR containing waste feedstock prior to hydrothermal liquefaction.

15. A system for decomposing PUR-containing waste feedstock, the system comprising
at least one inlet for receiving PUR-containing waste feedstock,
at least one hydrothermal liquefaction unit comprising a HTL inlet and a HTL outlet, the HTL inlet being arranged to receive PUR-containing waste feedstock from said inlet, the HTL outlet being arranged to output a HTL output stream,
at least one separation unit arranged to separate polyether polyol from the HTL output stream.
